# EUROPEAN PATENT SPECIFICATION

(11) **EP 2 024 218 B1**
(45) Date of publication and mention of the grant of the patent: **03.10.2012**
(21) Application number: 07754822.0
(22) Date of filing: 05.04.2007
(51) Int. Cl.: A45C 5/14, A45C 13/26, A45C 13/36, B62B 1/12, B62B 1/26

(54) **CHASSIS WITH RETRACTABLE WHEELS FOR WHEELED PRODUCTS**
CHASSIS MIT EINZIEHBAREN RÄDERN FÜR MIT RÄDERN VERSEHENE PRODUKTE
CHÂSSIS À ROUES ESCAMOTABLES POUR PRODUITS SUR ROUES

(30) Priority: 06.06.2006 US 811098 P
(43) Date of publication of application: 18.02.2009
(73) Proprietor: Arthur, Joseph, I., Palm Bay FL 32908 (US)
(72) Inventor: Arthur, Joseph, I., Palm Bay FL 32908 (US)
(74) Representative: Bradley, Adrian
(86) International application number: PCT/US2007/008364
(87) International publication number: WO 2007/145699

(56) References cited:
- US-A- 44 936
- US-A- 2 765 178
- US-A- 3 376 047
- US-A- 5 431 262
- US-A- 5 513 873
- US-A- 5 524 737
- US-A- 5 533 231
- US-A1- 2003 085 088
- US-A1- 2004 231 939
- US-B2- 7 165 661

## Description

### TECHINCAL FIELD

The present invention relates to wheeled devices, which may include but is not limited to wheeled suitcases, wheeled trunks, and to dollies for carrying luggage, and particularly to a chassis with retractable wheels that may be incorporated into a suitcase, trunk or other luggage article, or that may be adapted for use as a luggage carrier.

### BACKGROUND ART

Luggage, including suitcases and the like, is often heavy, bulky, and generally unwieldy. Travelers, in particular, often have multiple articles of luggage, which are not easily simultaneously transported by a single person. Although suitcases are frequently provided with wheels, the user must either hunch over, or otherwise lower his or her arms, in order to grasp the handle on the suitcase while the wheels contact the floor, or stand erect and carry the suitcase, which defeats the purpose of the wheels. The wheels are permanently affixed to the suitcase, and often project from the suitcase, so that the wheel assemblies may be damaged during handling by the airlines, and which may present difficulties when the user wishes to have the suitcase stably positioned on the floor.

A separate luggage carrier with wheels and an extensible handle may be utilized overcome these problems. However, such carriers have open frames that leave the wheel assemblies of the luggage carriers exposed to damage during handling by the airlines. Thus, a chassis with retractable wheels for luggage or a luggage carrier solving the aforementioned problems is desired.

US2003/0085088, showing a chassis according to the preamble of claim 1, discloses a retractable roller for a piece of luggage wherein the roller is brought into a rolling position when a carrying handle is extended, and retracts when the carrying handle is replaced.

US2004/0231939 discloses a bag mounted with casters at four corners of a bottom surface, having an extendible handle. The casters do not withdraw into the body of the device.

### DISCLOSURE OF INVENTION

The disclosure is directed to a chassis with retractable wheels. The chassis includes a hollow housing with wheel openings formed in the lower portion of the housing. A chassis sled is slidably disposed within the housing. A pair of lever arms is disposed in the lower portion of the housing. Each of the lever arms has a first end that is pivotally attached to the chassis sled. The chassis also includes a pair of wheel mounts with associated wheel levers, and a fender that is configured to cover the housing wheels openings when the wheels are in a retracted position. A web joins the fender to the wheel lever. The wheel levers have a first end that is pivotally attached to the second end of one of the lever arms. An axle is mounted to the second end of each of the wheel levers and a rotatable wheel is mounted on each of the axles. A pair of rods that are used as fulcrums for the wheel levers extend from the lower portion of the housing. The chassis also includes a handle assembly that is connected to the chassis sled and a locking mechanism. The locking mechanism selectively locks the chassis sled to the housing. The wheels pivot to an extended position outside the housing when the handle is pulled from the housing with the locking mechanism in the unlocked position, and pivot to a retracted position when the handle is pushed into the housing.

The disclosure is also directed to a luggage carrier. The luggage carrier includes a housing with a hollow interior. A chassis sled with a pair of wheel mounting struts is slidably disposed in the housing. A pair of articulated levers is pivotally attached to each of the wheel struts. A rotatable wheel is mounted to each of the articulated levers. The wheel is pivotal between a retracted position with the wheels disposed within the housing, and an extended position with the wheels extending from the housing. The luggage carrier also includes a handle that extends from the housing and slides into the chassis sled, and a means for locking the handle to the chassis sled and the housing. The wheels are in the retracted position within the housing when the handle is collapsed towards the housing and the chassis sled is lowered within the housing. The wheels are extended when the handle is moved away from the housing and the chassis sled is raised within the housing. The luggage further includes a means for releasably securing the chassis sled to the housing when the wheels are in the extended position.

The disclosure is further directed to luggage with retractable wheels. The luggage with retractable wheels includes the lower wall with a pair of wheel openings and an upper wall with at least one handle opening. A hollow housing is positioned within the interior of the luggage and a pair of wheel openings are formed through the housing. The luggage with retractable wheels includes a chassis sled that is slidably disposed within the housing and defined by a pair of parallel tubes with elongated, axially-extending slots, a crossmember that joins the lower ends of the tubes, and wheel mounting struts that extend from the lower ends of the tubes. A pair of lever arms is disposed within the lower portion of the housing. Each of the leveler arms has a first end that is pivotably attached to the chassis sled struts. The first end of a pair of wheel mounts (which includes a wheel lever) is attached to the second end of the lever arm. A fender that is configured to cover the housing wheel openings is joined to the wheel lever by a web. An axle is mounted to the second end of each of the wheel levers and a rotatable wheel is mounted on the axles. A pair of rods that extend from the lower portion of the housing define fulcrums for the wheel levers which cause the lever arms and the wheel levers to pivot during deployment of the wheels.

The luggage with retractable wheels includes a handle assembly with an elongated grip and vertical support tubes that extend from opposite ends of the grip. Each of the vertical support tubes have a projecting member that is slidable in the slots defined in the chassis sled tubes. A locking mechanism with a rotatable cam knob and spring-biased lock rods is disposed in the housing. The rods extend to opposite sides of the cam knob. The knob has a locked position in which the lock rods extend through the vertical support tubes and the chassis sled tubes, and an unlocked position retracting the lock rods from the vertical support tubes.

The luggage wheels pivot through the pair of wheel openings to an extended position outside the housing when the handle is pulled from the housing. The wheels pivot to a retracted position when the handle is pushed into the housing.

### BRIEF DESCRIPTION OF THE DRAWINGS

Fig. 1 is an environmental, perspective view of a chassis with retractable wheels according to the present invention configured as a luggage carrier.
Fig. 2 is a partially exploded perspective view of a chassis with retractable wheels for luggage or luggage carrier according to the present invention.
Fig. 3A is a rear perspective view of the chassis with retractable wheels of Fig. 1.
Fig. 3B is a rear perspective view of a chassis with retractable wheels according to the present invention incorporated into an article of luggage.
Fig. 4 is a side view of the internal skeletal structure of the chassis with retractable wheels according to the present invention, shown in a retracted configuration.
Fig. 5 is a side view of the internal skeletal structure of the chassis with retractable wheels according to the present invention, shown in a deployed configuration.
Fig. 6 is a partial side view in section of the chassis with retractable wheels according to the present invention, shown in the retracted configuration of Fig. 4.
Fig. 7 is an exploded perspective view of the internal skeletal structure of the chassis with retractable wheels according to the present invention.

Similar reference characters denote corresponding features consistently throughout the attached drawings.

### BEST MODES FOR CARRYING OUT THE INVENTION

The chassis with retractable wheels for luggage or a luggage carrier includes a housing, which defines an open interior region and an internal skeletal structure (i.e. the "chassis sled") which is slidably received within the open interior region of the housing. The chassis is configured so that the chassis sled is capable of moving axially upward and downward within the housing while the housing remains in a stationary position. The housing includes an upper portion and a lower portion, with the upper portion having a pair of handle openings formed therethrough and the lower portion having a pair of wheel openings formed therethrough.

The internal skeletal structure includes a pair of tubes, each having an upper end and a lower end, and a horizontal support bar mounted to, and positioned between, the lower ends of the pair of tubes. A pair of struts is mounted to the lower ends of the pair of tubes and extends downwardly and outwardly therefrom. Preferably, the struts are angled with respect to both the horizontal and vertical directions.

A mounting plate is joined to a lower end of each of the struts, and a lever arm is pivotally joined, at an upper end thereof, to each of the mounting plates. A wheel mount (which includes a wheel lever and axel) is pivotally mounted on a lower end of each lever arm. A rotatable wheel is mounted on the end of each wheel mount. The chassis further includes a handle with an upper gripping portion and a pair of vertical supports extending downwardly therefrom. The vertical supports extend through the pair of handle openings formed through the upper portion of the housing and are slidably received within the pair of tubes.

The wheels are deployed by axially sliding the chassis sled within the housing so that the housing remains stationary as the chassis sled is pulled upwardly (for example) within the housing. As the chassis sled moves upwardly within the housing, wheel lever arms attached to the chassis sled contact a pair of rods extending from the stationary housing. The rods cause the wheel lever arms to pivot and thereby push the wheels outwardly as the chassis sled moves upwardly. Once the wheels are fully extended, a locking mechanism holds the chassis sled in position relative to the housing.

The wheels may be retracted by unlocking the chassis sled from the housing and urging the chassis sled downwardly. As the chassis sled moves downwardly, the wheels are retracted. Once the wheels are fully retracted, the locking mechanism is engaged to lock the chassis sled in the retracted position relative to the housing.

The chassis (which includes the chassis sled and the housing) may be incorporated into the body of an article of luggage, such as a suitcase or trunk, or may be equipped with straps and a lower wall for use as a luggage carrier.

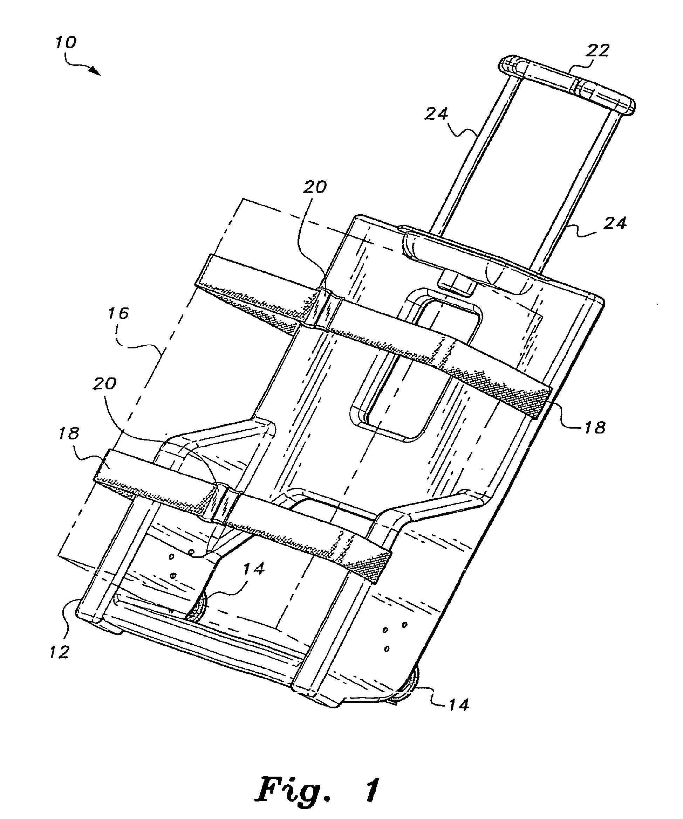

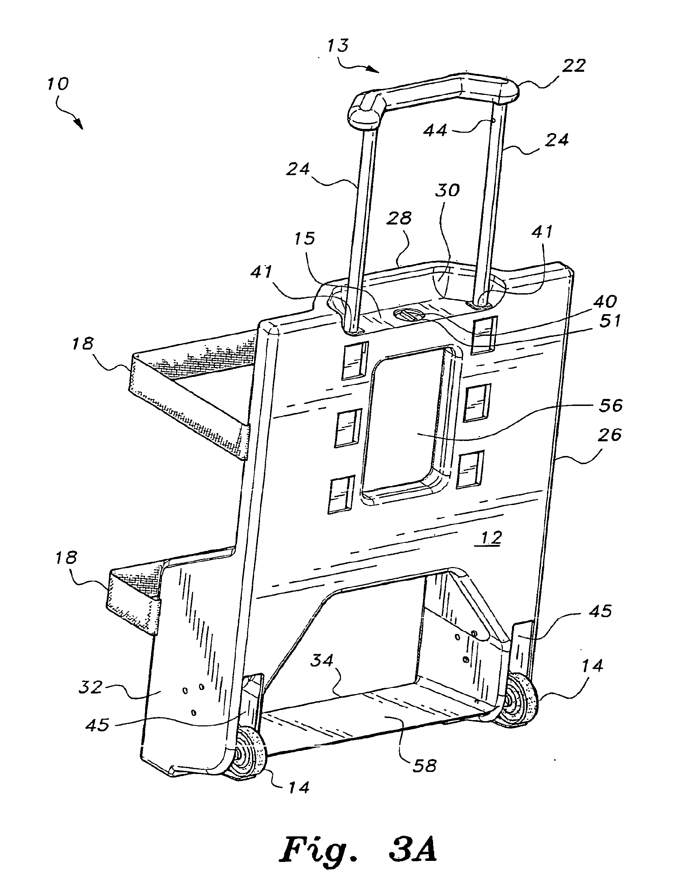

As best shown in Figs. 1-3A, when configured as a luggage carrier, the chassis **10** includes a housing **12** and a chassis sled **36,** which is slidably received within an open interior region of housing **12.** As shown in Figs. 1 and 3A, housing **12** includes a rear wall **26,** a pair of lower sidewalls **32,** and a lower wall **34** for securely and releasably supporting a piece of luggage, such as exemplary suitcase **16.** Housing **12** may be formed from plastic or any other suitable lightweight but structurally strong material.

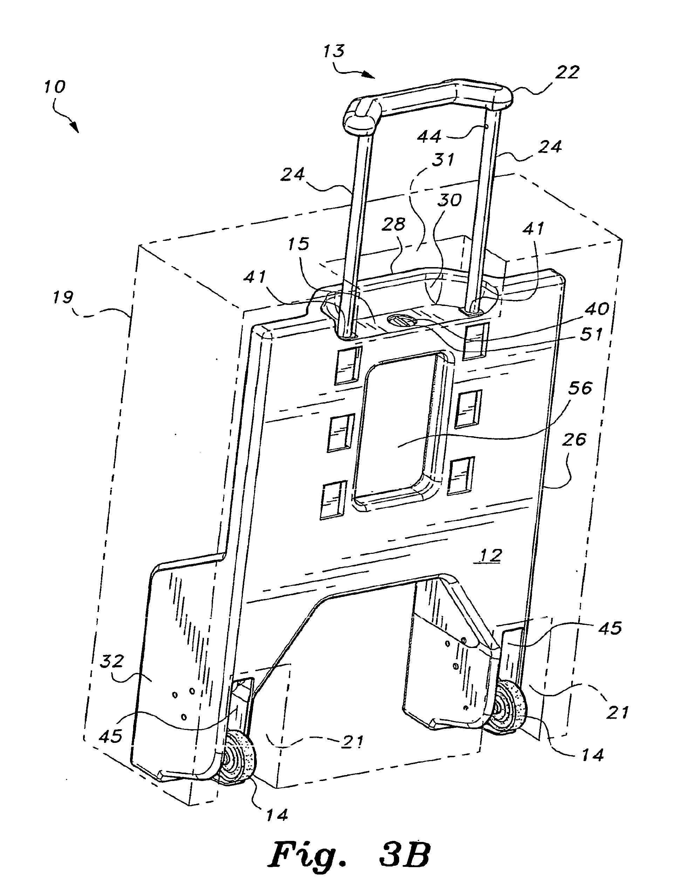

Alternatively, as shown in Fig. 3B (and to be described in further detail below), the chassis **10** may be incorporated into an article of luggage so that the housing **12** and the Chassis sled **36** may be mounted directly within a piece of luggage **19;** i.e., rather than providing a separate luggage carrier. The housing, retractable wheels, chassis sled and handle may be formed integrally with the piece of luggage **19,** with the wheels **14** projecting through a pair of openings **21** formed in a lower wall of the article of luggage **19,** and the handle **13** projecting through an opening **31** formed through an upper wall of the article of luggage.

The chassis **10** is directed towards the combination of the housing **12** with the chassis sled **36,** and it is to be understood that this combination may be utilized as a luggage carrier, such as that illustrated in Fig. 1, or may be formed integrally with a piece of luggage, such as exemplary luggage **19,** to form a piece of luggage with retractable wheels and a retractable handle. In the embodiment of Fig. 3B, as will be described in detail below, the lower wall **34** of housing **12** is removed, as are straps **18,** since, in this embodiment, there is no cargo to be secured to the housing **12.**

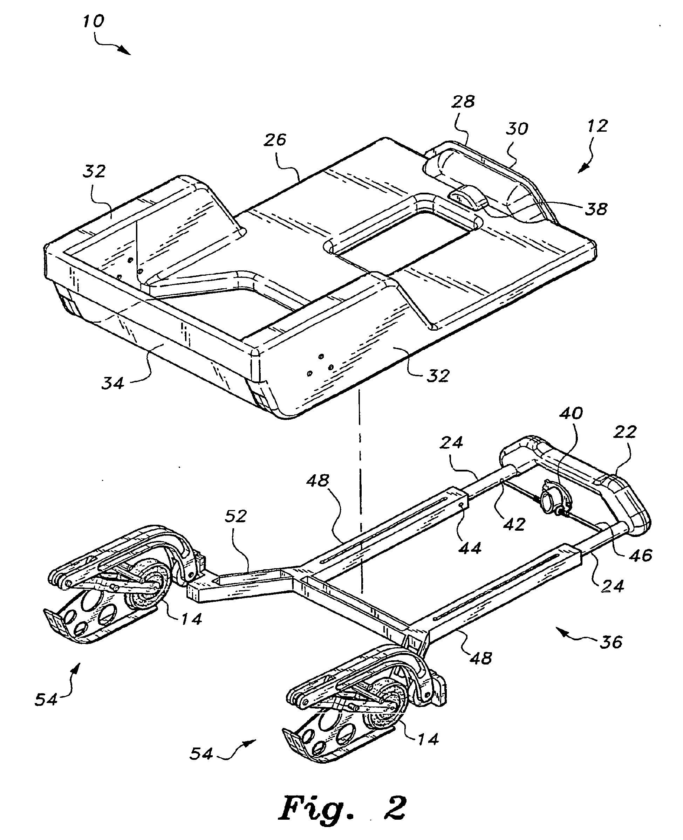

As shown in Fig. 3A, the rear wall **26** of housing **12** may have an upper opening **56** and a lower opening **58** formed therethrough, providing the user with rear access to the luggage **16,** and further decreasing the mass of chassis **10** without a decrease in overall structural stability. Housing **12** further has an upper receptacle portion **28** formed adjacent the upper edge of rear wall **26.** Upper receptacle portion **28** defines a recess **30,** which releasably receives an upper gripping portion **22** of handle **13** (best shown in Fig. 3A). Lower surface **15** of receptacle portion **2R** further has a pair of handle openings **41** formed therethrough, for receiving vertical supports **24** of handle **13.** Further, lower surface **15** has a substantially centrally located opening **41** formed therethrough, providing the user with access to locking mechanism **40,** which will be described in further detail below. The locking mechanism **40** is received within a lower receptacle portion **38,** best shown in Fig. 2.

The lower portion of rear wall **26** has a pair of wheel openings **45** formed therethrough, allowing a pair of wheels **14** to at least partially project out of housing **12** when chassis **10** is in a deployed configuration, as will described in further detail below. As best shown in Fig. 1, a pair of adjustable straps **18** may be mounted to laterally opposed side edges of housing **12** for securing luggage **16** thereto. Straps **18** may include buckles **20** or any other suitable means for adjusting the length of straps **18.**

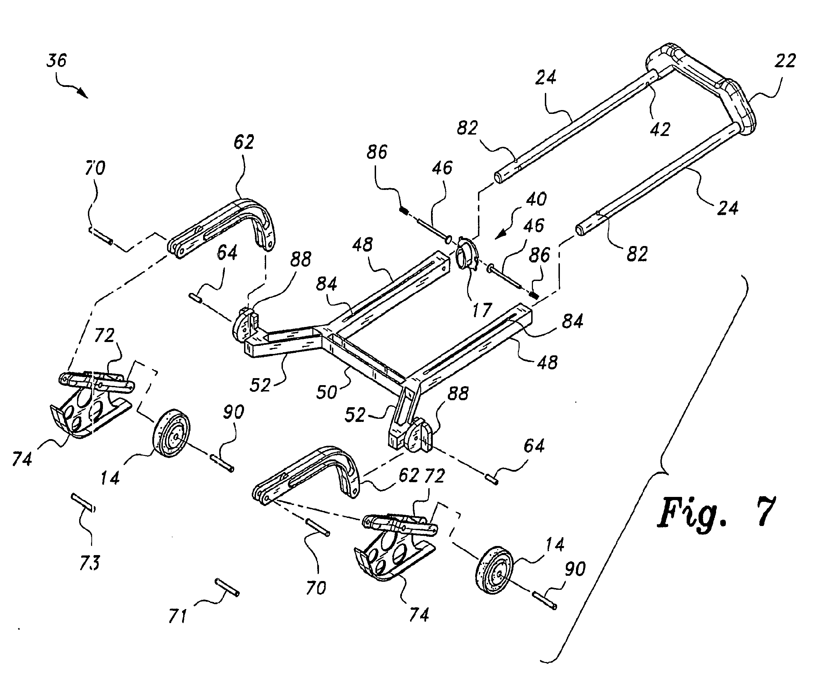

As best shown in Figs. 2 and 7, the internal skeletal structure **36** includes a pair of tubes **48** which slidably receive vertical supports **24** of handle **13.** As shown in Fig. 7, each vertical support **24** has a projecting member **82,** e.g., a guide pin (which may be a spring-biased detent pin), formed on a lower portion thereof, which is received within a corresponding slot **84** formed through a front surface of the respective tube **48.** Each slot extends in a substantially longitudinal direction. The sliding engagement of projecting members **82** with slots **84** maintains proper alignment of handle **13** and prevents the accidental removal of handle **13** from chassis **10,** limiting the travel of vertical supports **24** and handle **13** during both extension and retraction of the wheels.

Tubes **48** are joined to one another, at their respective lower ends, by a transverse member or horizontal support **50,** which is mounted between the respective lower ends and extends in the lateral direction. A pair of angled struts **52** are mounted to the lower ends of tubes **48** and project downwardly and outwardly therefrom, as shown. Tubes **48,** transverse member **50,** and struts **52** together form a chassis sled. A mounting plate **88** is joined to the lower end of each of angled struts **52** for the pivotal mounting of a lever arm **62** thereto. Lever arms **62** preferably have a substantially arcuate contour, as shown, and project downwardly from mounting plates **88.**

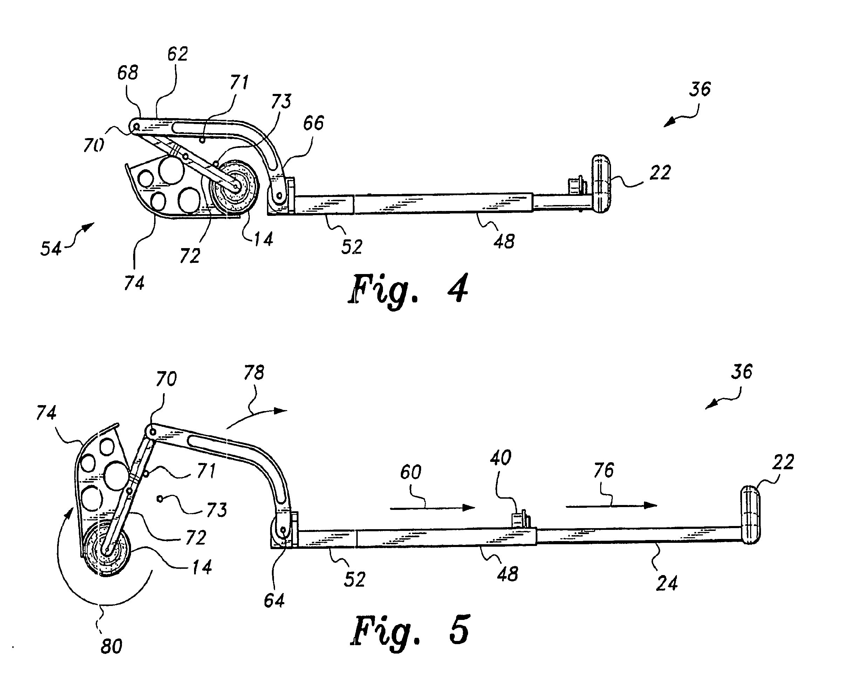

As shown in Figs. 4 and 5, the upper end **66** of each lever arm **62** is pivotally mounted to the corresponding mounting plate **88** by a pivot pin **64** or the like. The lower end **68** of each lever arm **62** is pivotally joined to a corresponding wheel assembly **54** by a pivot pin **70** or the like. Each wheel assembly **54** includes a fender **74,** which is mounted to a wheel lever **72** by a web. A lower end of each wheel lever **72** has a respective wheel **14** attached thereto by an axle **90,** the wheel **14** being mounted for rotation on axle **90.**

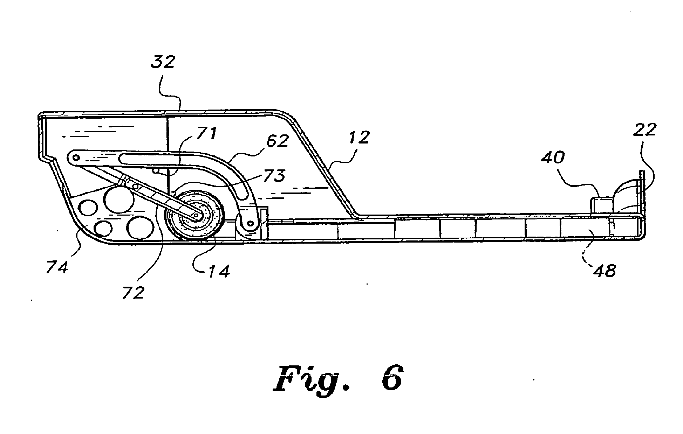

Figs. 4 and 6 illustrate the luggage chassis **10** in a retracted configuration, with wheels **14** being fully received within housing **12.** As shown in Fig. 6, the fender **74** is contoured to provide stable contact with a lower rear inner wall of housing **12** when in the retracted state. A pair of horizontal rods **71, 73** are positioned within the lower portion of housing **12,** with each rod **71, 73** extending in the lateral direction. In the retracted configuration, a central portion of each lever arm **62** rests on horizontal rod **71** and a lower portion of each wheel lever **72** is positioned adjacent horizontal rod **73.**

To deploy the wheels 14, the user pulls upwardly on the upper gripping portion **22** of handle **13** until the vertical supports **24** fully extend and the projecting member **82** reaches the top of the corresponding slot 84 in the front surface of the tubes **48,** as shown in Figure 7. As the user continues to pull upwardly on the handle **13,** the upward force is communicated through the vertical supports **24** to the tubes **48** causing the tubes **48** (and associated chassis sled **36)** to move upwardly within housing **12.** Since the housing **12** is not locked to the chassis sled at this time, the housing remains stationary while the chassis sled moves upwardly. The movement of the chassis sled **36** from the retracted position to the extended position is shown in Figures 4 and 5, with this upward movement of the chassis sled **36** being represented by directional arrows **76** and **60** in Fig. 5. The upward movement of tubes **48** generates movement in lever arms **62** and wheel levers **72,** as shown in Figure 5.

Horizontal rods **71, 73** are mounted to the housing **12,** rather than the chassis sled **36,** and thus the horizontal rods **71, 73** do not move relative to the housing **12.** As shown in Figure 4, the wheel lever **72** is initially in contact the horizontal rod **73,** and the lever arm **62** is in contact with the horizontal rod **71.** As best shown in Figure 5, the upward movement of chassis sled 36 causes the wheel lever **72** to contact the horizontal rod **73.** As the chassis sled **36** continues to move upwardly, the horizontal rod **73** pushes outwardly on the wheel lever **72** thereby causing the wheel lever **72** to rotate in a direction indicated by directional arrow **80** shown in Fig. 5. This rotation causes lever arms **62** to pivot in the direction indicated by directional arrow **78** in Figure 5. As the chassis sled **36** (and wheel lever **72)** moves further upwardly, the wheel lever **72** loses contact with horizontal rod **73,** and comes into contact with horizontal rod **71,** which pushes the wheel lever **72** further outwardly and causes the wheels **14** to fully deploy. Movement of wheel lever **72** and lever arm **62** stops when the fender 74 contacts the lower inner wall of housing **12.**

Once the wheels **14** have been fully deployed, the user may releasably lock the tubes **48** and vertical supports **24** to the housing **12** by engaging the locking mechanism **40.** As shown in Figs. 2 and 7, the locking mechanism **40** includes a central cam knob **17** with a pair of rods **46** that extend laterally from opposite sides of the cam knob **17.** Rotation of cam knob **17** to place the long axis of the cam between the heads of rods **46** compresses the springs **86** and drives the rods **46** outwardly and into holes **42** formed in vertical supports **24** and tubes **48** and thereby locks the chassis sled **36** to the housing **12.** To unlock the chassis sled 36 from the housing **12,** the cam knob **17** is rotated 90 degrees to 90° to place the short axis of the cam between the heads of rods **46,** thereby expanding the springs **86** to and withdraw rods 46 from holes **42** in the support tubes **24** and tubes **48.**

In order to retract the chassis sled **12,** the user unlocks the chassis sled **36** from the housing **12** and lowers the handle member **13,** so that upper gripping portion **22** is received within recess **30** of receptacle portion **28.** The downward movement of the handle **13** causes a downward movement of tubes **48.** The downward movement of tubes **48** generates downward movement in the lever arms **62** and the wheel levers **72** with respect to housing **12,** thereby causing the wheel levers **72** to pivot in a direction opposite that illustrated by directional arrow **80** in Fig. 5. The fenders **74** cease pivotal movement when wheel levers **72** contact horizontal rod **73** and lever arms **62** once again rest on horizontal rod **71.**

It should be further noted that fenders **74,** in this retracted configuration, releasably cover and seal wheel openings **45,** thus creating a continuous surface in rear wall **26,** and protecting the wheels **14** from damage.

In the embodiment of Fig. 3B, the housing **12** is formed integrally within the piece of luggage **19.** The lower wall **34** of housing **12** is removed, as housing **12** no longer receives luggage **16** or other cargo therein. Similarly, straps **18** have further been removed, since housing **12,** in the embodiment of Fig. 3B, is mounted within luggage **19,** rather than carrying the luggage externally thereon. The deployment and retraction of wheels **14** and handle **13** remain the same as that described above; however, luggage **19** preferably has a pair of openings **21** formed through a lower portion thereof, for the wheels **14** to selectively project therethrough. Similarly, an upper opening **31** is formed through an upper wall of luggage **19** for receiving handle **13.**

It is to be understood that the present invention is not limited to the embodiment described above, but encompasses any and all embodiments within the scope of the following claims.

## Claims

1. A chassis (10) with retractable wheels (14), comprising:
a) a housing (12) defining a hollow interior and having a lower portion having a pair of wheel openings (45) formed therethrough;
b) a chassis sled (36) slidably disposed within the housing (12);
c) a pair of lever arms (62), each said lever arm (62) being disposed in the lower portion of the housing (12), each of said lever arms (62) having a first end pivotally attached to said chassis sled (36), and having a second end;
d) a pair of wheel mounts (54), each said wheel mount (54) having a wheel lever (72), a fender (74) configured to cover the wheel openings in a retracted position, and a web joining the fender (74) to the wheel lever (72), the wheel levers (72) having a first end pivotally attached to the second end of one said lever arm (62) and having a second end;
e) an axle (90) mounted to the second end of each of the wheel levers (72) and a wheel (14) mounted for rotation on each of the axles (90);
f) two pairs of horizontal rods (71, 73) extending laterally from the lower portion of the housing (12), each pair of rods (71, 73) defining fulcrums for each of the wheel levers (72);
g) a handle assembly connected to said chassis sled (36);
h) a locking mechanism selectively locking said chassis sled (36) to said housing, said locking mechanism (40) having a locking position and an unlocked position;
wherein the wheels (14) are adapted to pivot to an extended position outside the housing (12) when the handle is pulled from the housing (12) with the locking mechanism in the unlocked position, and are adapted to pivot to a retracted position when the handle is pushed into the housing;
**characterized in that**
upward movement of the chassis sled (36) causes each wheel lever (72) to contact a first horizontal rod (73), and the first horizontal rod (73) to push outwardly on the wheel lever (72) thereby causing the wheel lever (72) to rotate away from lever arm (62), and further upward movement of the chassis sled (36) causes each wheel lever (72) to lose contact with the first horizontal rod (73), and comes into contact with a second horizontal rod (71), which pushes the wheel lever (72) further outwardly and causes the wheels (14) to fully deploy outside the wheel openings.

2. The chassis with retractable wheels (14) described in Claim 1, wherein said chassis sled (36) comprises a pair of parallel tubes having elongated, axially extending slots defined therein, a cross member joining lower ends of the tubes, and wheel mounting struts (52) extending from the lower ends of the tubes, each of said struts (52) being connected to a said lever arm (62).

3. The chassis with retractable wheels (14) described in Claim 2, wherein said handle assembly has an elongated grip and vertical support tubes (24) extending from opposite ends of the grip, each of the vertical support tubes (24) having a projecting member (82) slidable in the axially extending slot defined in said chassis sled tubes.

4. The chassis with retractable wheels described in Claim 3, wherein said locking mechanism has a rotatable cam knob (17) and spring biased lock rods disposed in the housing and extending to opposite sides of the cam knob (17), the knob (17) having a locked position extending the lock rods through the vertical support tubes (24) and the chassis sled tubes, and an unlocked position retracting the lock rods from the vertical support tubes (24).

5. The chassis with retractable wheels described in Claim 4, wherein at least one side of said housing (12) comprises a container abutting said housing (12).

6. The chassis with retractable wheels described in Claim 5, wherein said container is a piece of luggage.

7. The chassis with retractable wheels described in Claim 4, wherein a base extends perpendicular from said housing.

8. The chassis with retractable wheels described in Claim 7, further comprising a fastening means to secure cargo to said chassis.

9. The chassis with retractable wheels described in Claim 8, wherein said fastening mean comprises at least one belt and said cargo comprises luggage.

## Patentansprüche

1. Chassis (10) mit einziehbaren Rädern (14), umfassend:
a) ein Gehäuse (12), das einen hohlen Innenraum definiert und einen unteren Bereich aufweist, der ein Paar durch das Gehäuse hindurch ausgebildete Radöffnungen (45) aufweist;
b) ein Chassis-Schlitten (36), der im Gehäuse (12) verschiebbar angeordnet ist;
c) ein Paar Hebelarme (62), wobei jeder Hebelarm (62) im unteren Bereich des Gehäuses (12) angeordnet ist und jeder der Hebelarme (62) ein erstes Ende, das drehbar am Chassis-Schlitten (36) angebracht ist, und ein zweites Ende aufweist;
d) ein Paar Radaufhängungen (54), wobei jede Radaufhängung (54) einen Radarm (72), eine Abdeckung (74), die die Radöffnungen in eingezogener Position abdecken kann, und eine Fläche aufweist, die die Abdeckung (74) mit dem Radarm (72) verbindet, wobei die Radarme (72) ein erstes Ende, das drehbar mit dem zweiten Ende eines Hebelarms (62) verbunden ist, und ein zweites Ende aufweisen;
e) eine Achse (90), die am zweiten Ende jedes der Radarme (72) befestigt ist, und ein Rad (14), das auf jeder der Achsen (90) drehbar befestigt ist;
f) zwei Paare horizontaler Stäbe (71, 73), die sich vom unteren Bereich des Gehäuses (12) seitlich erstrecken, wobei jedes der Stabpaare (71, 73) Schwenkpositionen für jeden der Radarme (72) definiert;
g) eine Griffeinrichtung, die mit dem Chassis-Schlitten (36) verbunden ist;
h) einen Einrastmechanismus, der den Chassis-Schlitten (36) am Gehäuse selektiv einrasten kann, wobei der Einrastmechanismus (40) eine eingerastete Position und eine gelöste Position aufweist;
wobei die Räder (14) so eingerichtet sind, dass sie in eine ausgefahrene Position außerhalb des Gehäuses (12) schwenken können, wenn der Griff bei gelöster Position des Einrastmechanismus aus dem Gehäuse (12) gezogen wird, und so eingerichtet sind, dass sie in eine eingezogene Position schwenken können, wenn der Griff in das Gehäuse hineingeschoben wird;
**dadurch gekennzeichnet, dass**
eine Aufwärtsbewegung des Chassis-Schlittens (36) bewirkt, dass jeder Radarm (72) einen ersten horizontalen Stab (73) berührt und dass der erste horizontale Stab (73) sich auswärts auf den Radarm (72) zuschiebt, wodurch der Radarm (72) vom Hebelarm (62) wegschwenkt, und eine weitere Aufwärtsbewegung des Chassis-Schlittens (36) bewirkt, dass jeder Radarm (72) Kontakt mit dem ersten horizontalen Stab (73) verliert und in Kontakt mit einem zweiten horizontalen Stab (71) tritt, was die Radarme (72) weiter auswärts schiebt und bewirkt, dass die Räder (14) sich vollständig außerhalb der Radöffnungen entfalten.

2. Das Chassis mit einziehbaren Rädern (14) gemäß Anspruch 1, wobei der Chassis-Schlitten (36) ein Paar parallele Röhren, die lange, sich axial erstreckende Führungsöffnungen definieren, eine Verstrebung, die die unteren Enden der Röhren miteinander verbindet, und Radaufhängungstragstücke (52) aufweist, die sich von den unteren Enden der Röhren erstrecken, wobei jedes der Tragstücke (52) mit einem der Hebelarme (62) verbunden ist.

3. Das Chassis mit einziehbaren Rädern (14) gemäß Anspruch 2, wobei die Griffeinrichtung einen länglichen Griff und vertikale Stützröhren (24) aufweist, die sich von gegenüber liegenden Enden des Griffs aus erstrecken, wobei jede der vertikalen Stützröhren (24) ein hervorstehendes Element (82) aufweist, das in der sich axial erstreckenden Führungsöffnung, die in den Röhren des Chassis-Schlittens definiert ist, verschiebbar ist.

4. Das Chassis mit einziehbaren Rädern gemäß Anspruch 3, wobei der Einrastmechanismus einen drehbaren Nockendrehknopf (17) und unter Federvorspannung stehende Verschließstäbe aufweist, die in dem Gehäuse vorliegen und sich auf gegenüberliegenden Seiten des Nockendrehknopfs (17) erstrecken, wobei der Nockendrehknopf (17) eine Verschlussposition hat, bei der sich die Verschließstäbe durch die vertikalen Stützröhren (24) und die Röhren des Chassis-Schlittens erstreckt, und eine unverschlossene Position, in der sich die Verschließstäbe von den vertikalen Stützröhren (24) zurückziehen.

5. Das Chassis mit einziehbaren Rädern gemäß Anspruch 4, wobei mindestens eine Seite des Gehäuses (12) einen Container aufweist, der an das Gehäuse (12) anschließt.

6. Das Chassis mit einziehbaren Rädern gemäß Anspruch 5, wobei der Container ein Gepäckstück ist.

7. Das Chassis mit einziehbaren Rädern gemäß Anspruch 4, wobei sich eine Basis senkrecht von dem Gehäuse erstreckt.

8. Das Chassis mit einziehbaren Rädern gemäß Anspruch 7, ferner umfassend eine Sicherungseinrichtung, um Ladung am Chassis zu sichern.

9. Das Chassis mit einziehbaren Rädern gemäß Anspruch 8, wobei die Sicherungseinrichtung mindestens einen Gurt umfasst und die Ladung Gepäck umfasst.

## Revendications

1. Châssis (10) à roues escamotables (14), comprenant :
a) un logement (12) définissant un intérieur creux et ayant une partie inférieure ayant une paire d'ouvertures de roue (45) formées à travers cette dernière ;
b) un traîneau de châssis (36) disposé de manière coulissante à l'intérieur du logement (12) ;
c) une paire de bras de levier (62), chacun desdits bras de levier (62) étant disposé dans la partie inférieure du logement (12), chacun desdits bras de levier (62) ayant une première extrémité fixée de manière pivotante audit traîneau de châssis (36), et ayant une seconde extrémité ;
d) une paire de bâtis de roue (54), chacun desdits bâtis de roue (54) ayant un levier de roue (72), un garde-boue (74) configuré pour recouvrir les ouvertures de roue dans une position escamotée, et une âme assemblant le garde-boue (74) au levier de roue (72), les leviers de roue (72) ayant une première extrémité fixée de manière pivotante à la seconde extrémité de l'un desdits bras de levier (62) et ayant une seconde extrémité ;
e) un essieu (90) monté sur la seconde extrémité de chacun des leviers de roue (72) et une roue (14) montée pour la rotation sur chacun des essieux (90) ;
f) deux paires de tiges horizontales (71, 73) s'étendant latéralement à partir de la partie inférieure du logement (12), chaque paire de tiges (71, 73) définissant des pivots pour chacun des leviers de roue (72) ;
g) un ensemble de poignée raccordé audit traîneau de châssis (36) ;
h) un mécanisme de blocage bloquant sélectivement ledit traîneau de châssis (36) sur ledit logement,
ledit mécanisme de blocage (40) ayant une position de blocage et une position débloquée ;
dans lequel les roues (14) sont adaptées pour pivoter dans une position étendue à l'extérieur du logement (12) lorsque la poignée est tirée du logement (12) avec le mécanisme de blocage dans la position débloquée, et sont adaptées pour pivoter jusqu'à une position escamotée lorsque la poignée est poussée dans le logement ;
caractérisé en ce qui :
le mouvement ascendant du traîneau de châssis (36) amène chaque levier de roue (72) à entrer en contact avec une première tige horizontale (73) et la première tige horizontale (73) à pousser vers l'extérieur sur le levier de roue (72) amenant ainsi le levier de roue (72) à tourner à distance du bras de levier (62) et le mouvement ascendant supplémentaire du traîneau de châssis (36) amène chaque levier de roue (72) à être en contact sans serrage avec la première tige horizontale (73) et vient en contact avec une seconde tige horizontale (71) qui pousse le levier de roue (72) davantage vers l'extérieur et amène les roues (14) à se déployer complètement à l'extérieur des ouvertures de roue.

2. Châssis à roues escamotables (14) selon la revendication 1, dans lequel :
ledit traîneau de châssis (36) comprend une paire de tubes parallèles ayant des fentes allongées s'étendant de manière axiale définies à l'intérieur de ces derniers, une traverse assemblant les extrémités inférieures des tubes, et des entretoises de montage de roue (52) s'étendant à partir des extrémités inférieures des tubes, chacune desdites entretoises (52) étant raccordée audit bras de levier (62).

3. Châssis à roues escamotables (14) selon la revendication 2, dans lequel ledit ensemble de poignée a une partie de préhension allongée et des tubes de support verticaux (24) s'étendant à partir des extrémités opposées de la partie de préhension, chacun des tubes de support verticaux (24) ayant un élément en saillie (82) pouvant coulisser dans la fente s'étendant de manière axiale définie dans lesdits tubes de traîneau de châssis.

4. Châssis à roues escamotables selon la revendication 3, dans lequel ledit mécanisme de blocage a un bouton de came rotatif (17) et des tiges de blocage à ressort disposées dans le logement et s'étendant vers les côtés opposés du bouton de came (17),
le bouton (17) ayant une position bloquée étendant les tiges de blocage à travers les tubes de support verticaux (24) et les tubes de traîneau de châssis, et une position débloquée escamotant les tiges de blocage des tubes de support verticaux (24).

5. Châssis à roues escamotables selon la revendication 4, dans lequel au moins un côté dudit logement (12) comprend un contenant venant en butée contre ledit boîtier (12).

6. Châssis à roues escamotables selon la revendication 5, dans lequel ledit contenant est un bagage.

7. Châssis à roues escamotables selon la revendication 4, dans lequel une base s'étend perpendiculairement audit logement.

8. Châssis à roues escamotables selon la revendication 7, comprenant en outre des moyens de fixation pour fixer un chargement sur ledit châssis.

9. Châssis à roues escamotables selon la revendication 8, dans lequel lesdits moyens de fixation comprennent au moins une courroie et ledit chargement comprend un bagage.
